(19) Europäisches Patentamt

European Patent Office

Office européen des brevets

(11) **EP 4 625 170 A1**

(12) **EUROPEAN PATENT APPLICATION**

(43) Date of publication:
01.10.2025 Bulletin 2025/40

(21) Application number: 25165631.0

(22) Date of filing: 24.03.2025

(51) International Patent Classification (IPC):
*G06F 9/50* (2006.01)  *G06F 9/455* (2018.01)

(52) Cooperative Patent Classification (CPC):
G06F 9/5072; G06F 9/45558; G06F 9/5083;
G06F 2009/4557

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.03.2024 US 202418622751

(71) Applicant: Microsoft Technology Licensing, LLC
Redmond, WA 98052 (US)

(72) Inventors:
• **Tang, Zuzu Xiyun**
**Redmond, WA, 98052 (US)**
• **Cortez, Eli**
**Redmond, WA, 98052 (US)**
• **Barbalho, Hugo De Oliveira**
**Redmond, WA, 98052 (US)**

(74) Representative: **Grünecker Patent- und**
**Rechtsanwälte**
**PartG mbB**
**Leopoldstraße 4**
**80802 München (DE)**

(54) **SYSTEMS AND METHODS FOR OPTIMIZING VM DEPLOYMENTS**

(57) A computerized method optimizes VMs (VMs) deployment. Optimization goals are received for a heterogeneous deployment of a group of VMs. A recommendation timer is set and candidate VMs are identified based on the optimization goals. When the recommendation timer has not expired: a score for each of the identified candidate VMs is determined, a candidate VM with a highest score amongst the determined scores is assigned to a first group recommendation of group recommendations, and a location usage counter for the location of the candidate VM is updated. If the location usage counter meets a threshold, candidate VMs having similar location are removed from further calculations, otherwise, scores for the candidate group of VMs is recomputed. Based on a total score for each of the group recommendations, a group recommendation is selected to deploy the group recommendation comprising the group of heterogeneous VMs.

FIG. 1

EP 4 625 170 A1

**Description**

BACKGROUND

Managed virtual machine (VM) cloud providers, such as Amazon Web Services (AWS)®, Microsoft Azure®, and Google Cloud Platform (GCP)®, enable users to host their websites or applications on their VMs. However, it is essential for the users to have a thorough understanding of the geographical distribution and performance capabilities of the VMs offered by a managed VM cloud provider to optimally deploy their websites or applications on these VMs as per their needs. This gets complicated because different users may have different requirements with respect to the VMs they need to deploy, such as stock keeping units (SKUs), VM types (e.g., Spot, On Demand, or both), regions, availability zones etc. Further, some users may want to optimize capacity, some users may want to optimize price, and others may want to have a balance between the two (or other parameters) for deploying their websites or applications on the VMs. However, it is difficult and sometimes not possible to quickly generate recommendations for VM deployments based on user goals.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A computerized method for optimizing VM deployment is described. Inputs for deploying a group of heterogeneous VMs are received. The input comprises goals, such as VM SKU options, location options, and optimization goals, such price and capacity and a defined quantity of VMs in the group of heterogeneous VMs. A recommendation timer is set, and candidate VMs are identified based on the input. The identified candidate VMs are listed into a candidate group of VMs and each of the VMs in the candidate group of VMs is assigned to a location from a plurality of locations. When the recommendation timer has not expired: a score for each of the identified candidate VMs is determined, a candidate VM with a highest score amongst the determined scores is assigned to a first group recommendation of a plurality of group recommendations, a location usage counter for the location of the candidate VM is updated, a determination is made whether the location usage counter for the location of the candidate VM has met a location usage threshold, upon determining that the location usage counter for the location of the candidate VM has met the location usage threshold, the candidate VM from the candidate group of VMs and any other VM from the candidate group of VMs that have been assigned to the location of the candidate VM are removed, and upon determining that the location usage counter for the location of the candidate VM has not met the location usage threshold, the score for the candidate VM and any other VM from the candidate group of VMs that have been assigned to the location of the candidate VM are updated based on the updated location usage counter for the location of the candidate VM. A total score for each of the plurality of group recommendations is identified. Based on the total score for each of the plurality of group recommendations, a group recommendation is selected from the plurality of group recommendations to deploy the group recommendation comprising the group of heterogeneous VMs. The group of heterogeneous VMs in the selected group recommendation is deployed.

BRIEF DESCRIPTION OF THE DRAWINGS

The present description will be better understood from the following detailed description read considering the accompanying drawings, wherein:

FIG. 1 illustrates a block diagram of an example system for optimizing VMs deployment;

FIG. 2 is a flowchart illustrating an example method for optimizing VMs deployment;

FIG. 3 is a flowchart illustrating an example method of building greedy recommendations for recommending VMs in an optimized manner based on user input;

FIGS. 4-5 illustrate exemplary calculations for providing recommendations to optimize VMs deployment based on user input; and

FIG. 6 illustrates an example computing apparatus as a functional block diagram.

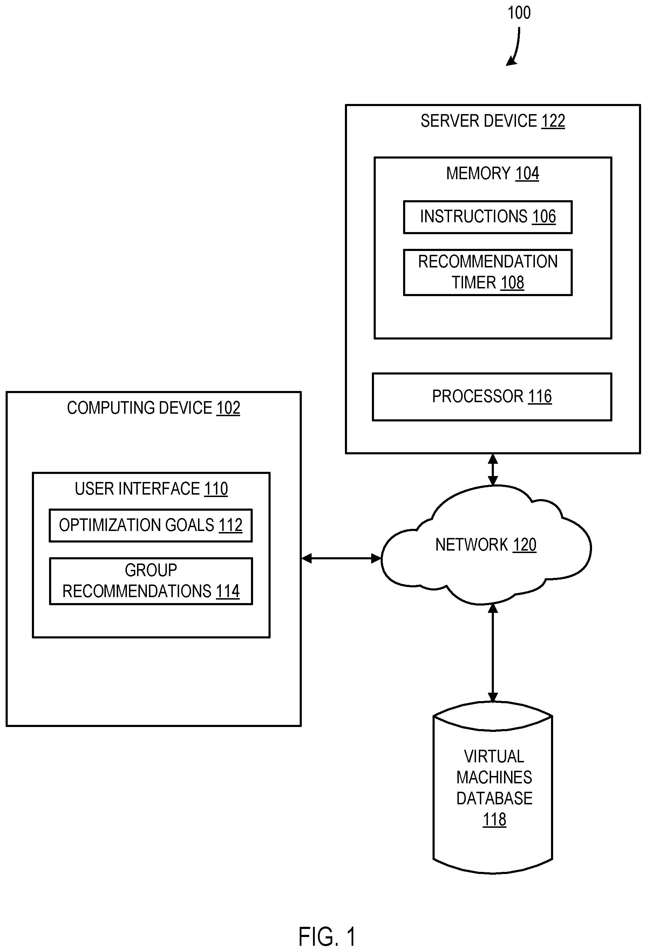

Corresponding reference characters indicate corresponding parts throughout the drawings. In FIGS. 1 to 6, the systems are illustrated as schematic drawings. The drawings may not be to scale. Any of the figures may be combined into a single example or embodiment.

DETAILED DESCRIPTION

Aspects of the disclosure provide systems and methods for optimizing virtual machine (VM) deployment. The examples described herein provide a unique approach to recommend distributions of VMs for deployment using different SKUs, VM types, regions, and availability zones while optimizing for different user goals, such as capacity and price, and maintaining zonal balance. The examples optimally generate combinations of diverse VMs by balancing a set of goals: maximizing signal scores (the score assigned to a VM based on one or more of capacity and price data, and (2) having the combination that is balanced across availability zones. The weight of these potentially competing goals is adjusted with a tuning parameter to lean results toward one goal or the other based on user preferences. The processes described herein generate combinations within a set time limit and utilize a Greedy algorithm to ensure that a search starts at an optimal point in a result space.

The disclosure operates in an unconventional manner at least by providing VM allocation recommendation and/or deploying heterogeneous VMs in a group recommendation that may be automatically selected/deployed based on a total score. Conventional systems cannot recommend VMs that span across regions and availability zones. Further, these conventional systems typically rely on an initial score for recommending VMs which may not be an optimized recommendation for user needs and is also likely to be biased towards a single region. If VMs from a single region are recommended, this is likely to strain the network resources in that region which may finally result in a breakdown of some of the network resources that may result in inaccessible VMs in that region or require costly migrations to help mitigate the strain. Similarly, at a more granular level, if the VMs from a single availability zone in a region are selected, this is likely to strain the network resources in that availability zone within the region.

Examples of the disclosure reduce processing resource requirements and enhance user experience by implementing a greedy algorithm providing recommendations within a set time limit (e.g., by setting a recommendation timer of 1 second, 2 second, or the like). Thus, the processing resources are not occupied beyond the recommendation timer and optimized recommendations are provided for deploying a group of heterogeneous VMs very quickly to the user. As another example, the disclosure operates in an unconventional manner at least by enabling to the user to identify and submit the user's goals on a user interface, while also presenting the recommendations on the user interface that enables the user to select a group recommendation for deploying a group of heterogeneous VMs in the selected group recommendation.

The examples described herein eliminate the need of require long processing times (e.g., 1 hour, 1 day, or the like) in order to generate and evaluate all of the options enhances the user experience while advantageously evaluating high scoring VMs first and ensure heterogeneity of the VMs by implementing a greedy solution with a balancing / tuning parameter within a constrained recommendation time (because the recommendation timer is likely to expire before all the possible combinations of user input (e.g., optimization goals) can be evaluated). However, a high initial signal score does not necessarily translate to a high final score for a VM in view of the optimization goals. In this way, by deploying the group of heterogeneous VMs in a selected group recommendation, examples of the disclosure optimize the VMs deployment that uses less processing and network resources, has higher availability of the VMs due to spreading of deployed VMs across multiple regions and availability zones, and enhances user experience without extending the recommendation time.

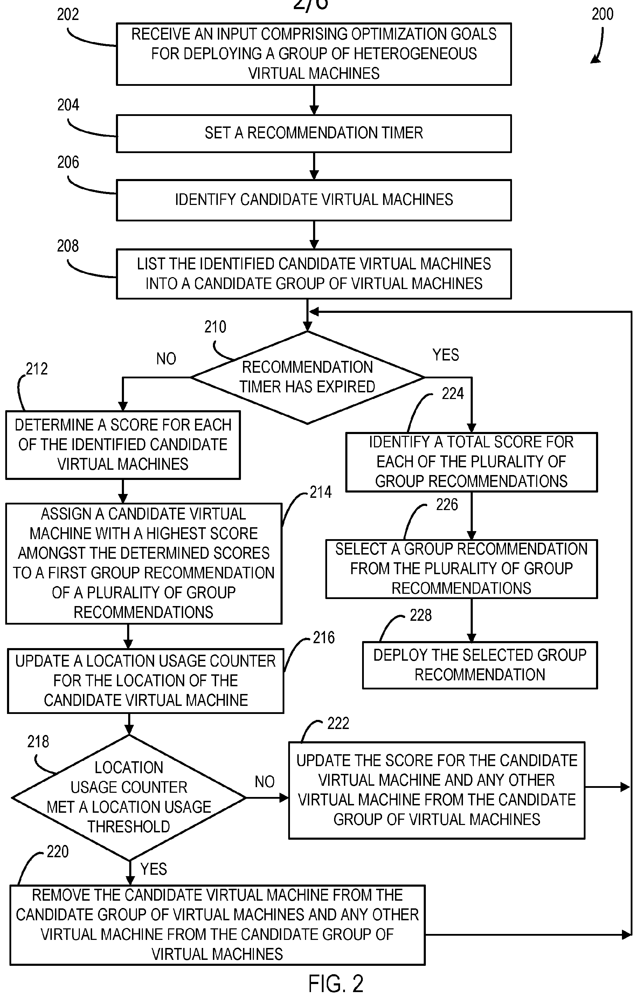

FIG. 1 is a block diagram illustrating a system 100 for optimizing VMs deployment. A computing device 102, a server device 122 comprising a processor 116, and a memory 104 coupled to a VMs database 118 via a network 120. The memory 104 stores instructions 106 that upon execution by the processor 116 perform operations described in FIGS. 2-4.

The computing device 102 comprises a user interface 110 and optimization goals 112 for deploying a group of heterogeneous VMs are received from a user via the user interface 110. The optimization goals 112 comprise goals of the user, for example, one or more of capacity, price, and a defined quantity of VMs in the group of heterogeneous VMs. In some examples, the optimization goals 112 comprise zonal balance that provide recommendations for VMs spread across user selected regions and availability zones (e.g., regions in a particular country or in certain regions of a particular country). Providing a balance with respect to regions and availability zones reduce issues if VMs in a region somehow cannot be accessed, other VMs in the other regions and availability zones may be still available thereby the system 100 advantageously has high availability. As the number of optimization goals 112 increase and/or a count of VMs increase, conventional approaches to recommend VMs become infeasible due to an exponential increase in evaluating possible combination of VMs meeting the optimization goals 112. Even with the increase in number of optimization goals 112 and/or count of VMs, examples of the disclosure efficiently create distributions of candidate recommendations, rank the distributions based on optimization goals 112, and then give balanced distributions (e.g., that are regionally and zonally balanced) more weight.

In some examples, the recommendation timer 108 is the same across the system 100 for different users requesting recommendations for deploying group of heterogeneous VMs, and in other examples the recommendation timer 108 is different across the system 100 for different users requesting recommendations for deploying group of heterogeneous VMs. In some examples, the recommendation timer 108 is a default time (e.g., one second), may be selected by the user (e.g., based on how quickly the user needs the recommendations and/or deployment), or may be selected by an administrator based on, for example, knowledge of the user's goals, time frame, and current resources capacity. In some examples, the recommendation timer 108 is based on the number of VMs the user is requesting (e.g., a lower number VMs would automatically initiate a lower recommendation time for the recommendation timer 108 while a higher number of VMs would automatically initiate a default recommendation time or a higher recommendation time for the recommendation timer 108.

In one example, once the user requests VM recommendations and provides the optimization goals 112 to the server device 122 via the user interface 110, a timer associated with the recommendation timer 108 is set. In the user request and/or the optimization goals 112, the user identifies a quantity of VMs the user desires/wants to deploy. Thereafter, the server device 122 identifies candidate VMs for the recommendations based on the optimization goals 112 received from the user via the user interface 110 and the available VMs listed in the VM database 118. In one example, each of the candidate VMs comprises a signal score, a configuration, and location information. The signal score is assigned to a VM based on capacity and price data. For example, a higher capacity VM will have a higher signal score than a lower capacity VM if the price data is same for both VMs. Similarly, if a capacity of two VMs is same then a VM having lower price will have a higher signal score than another VM having higher price. In some examples, the signal score for each VM may be precalculated and stored in the VMs database 118 or determined on-demand, by the server device 122 when the candidate VMs are identified from VMs database 118. In one example, the configuration comprises Stock Keeping Unit (SKU) and location information comprises region and availability zone information.

The identified candidate VMs are listed into a candidate group of VMs and each of the VMs in the candidate group of VMs is assigned to a location (e.g., a region and an availability zone with the region) from a plurality of locations by the server device 122 or the location is identified by the server device 122. In this example, the candidate group of VMs includes a list of all candidate VMs that may be deployed, which is more than the quantity of VMs requested by the user. As such, the server device 122 assigns the candidate group of VMs into subgroups (e.g., group recommendations), and the number of VMs within each group recommendation is based on the quantity of VMs requested by the user. For example, when the user indicates that the user wants to deploy 4 VMs (e.g., as identified in the request and/or in the optimization goals 112), each group recommendation includes 4 VMs.

To determine which candidate VMs are to be placed into each group recommendation, a score (e.g., an F(x) score described below) for each of the identified candidate VMs is determined. A first candidate VM with a highest score amongst the determined scores is assigned to a first group recommendation of a plurality of group recommendations 114. After the first candidate VM with the highest score is assigned to the first group recommendation, a location usage counter for the location of the first candidate VM is updated. That is, to facilitate a proper balance of the VMs being recommended, each location has a location usage threshold that represents the maximum number of VMs a particular location may include in the group recommendations 114. Thus, when the first candidate VM is selected to be in the first group recommendation, the location/usage counter for the location associated with the first candidate VM is increased by 1 (or decreased by 1 if starting from the maximum threshold number). A determination is then made as to whether the location usage counter for the location of the first candidate VM has met a location usage threshold for that particular location. Upon determining that the location usage counter for the location of the first candidate VM has met the location usage threshold, the first candidate VM from the candidate group of VMs and any other VM from the candidate group of VMs that have been assigned to the same location of the first candidate VM are removed from the list of the candidate group of VMs. For example, any VM in the candidate group of VMs that have the same region and same availability zone as the first candidate VM is removed from the list of candidate VMs. As such, when a second candidate VM is selected, the second candidate VM will not be from the same location as the first candidate VM given that all the candidate VMs that had the same location as the first candidate VM were removed prior to selecting the second candidate VM.

In one example, upon determining that the location usage counter for the location of the first candidate VM has not met the location usage threshold, the location usage counter is updated and the score for the first candidate VM and any other VM from the candidate group of VMs that have been assigned to the same location of the candidate VM are updated based on the updated location usage counter for the location of the candidate VM. As described in further detail below, an updated location usage counter for each location effects the score assigned to each VM in the location.

In some examples, the score is determined by evaluating a scoring function such as:

$$F(x) = \frac{score(x)}{\max\limits_{y \in S} score(y)}\lambda - (1 - \lambda)\frac{Counter_{(region,AZ)}(x)}{n} \qquad (1)$$

The scoring function F(x) is equal to a scoring portion $(\frac{score(x)}{\max\limits_{y \in S} score(y)}\lambda)$ minus a balancing portion

$$\left((1-\lambda)\frac{Counter_{(region,AZ)}(x)}{n}\right)$$ . The scoring portion is equal to the score of an identified candidate VM (($score(x)$)) divided by the highest score $\left(\max_{y \in S} score(y)\right)$ multiplied by a weight ($\lambda$). In some examples, the weight indicates how much the server device 122 prefers to load balance and how much the server device 122 is greedy in terms of capacity and/or cost. For example, if the weight is 1 ($\lambda = 1$), the system 100 is totally greedy in terms of the capacity and/or cost. If the weight is 0, the scoring function is left with only the balancing portion. The balancing portion is equal to (1 - the weight) multiplied by the location usage counter for the location of the candidate VM ($Counter_{(region,AZ)}(x)$) divided by the defined quantity of VMs in the group of heterogeneous VMs ($n$). Thus, as candidate VMs from the same location are selected to be in a group recommendation and the location usage counter (e.g., $Counter_{(region,aAZ)}(x)$) is adjusted, VMs from that location become less attractive in terms of load balance as the score for each of these candidate VMs decreases based on the updated location usage counter.

In addition, assigning the first candidate VM with (e.g., the candidate VM with a highest score amongst the determined scores) to a first group recommendation of a plurality of group recommendations causes the first group recommendation to decrease an available capacity for the defined quantity of VMs or reach capacity for the defined quantity of VMs e.g., the first candidate VM is the fourth VM to be selected to the first group recommendation and the defined quantity of VMs is 4).

As explained above, the location usage threshold is a number of times a VM in a same region and availability zone can be used. The identified candidate VMs in a first location may have a first location usage threshold that is different from a second location usage threshold for a second identified candidate VM assigned to a second location. In some examples, the location usage threshold (such as the first or the second location usage thresholds) may be system parameters set by the server device 122 or may be input by the user via the user interface 110.

A total score for each of the plurality of group recommendations 114 is identified/determined by the server device 122. The total score is an average of scores for all candidate VMs in each of the plurality of group recommendations. In some examples, based on the total score for each of the plurality of group recommendations 114, a group recommendation is automatically selected from the plurality of group recommendations 114 and the group of heterogeneous VMs in the selected group recommendation is deployed automatically (e.g., without user intervention). In this example, the automatically selected group recommendation is the one with a highest total score amongst the plurality of group recommendations 114. In other examples, the plurality of group recommendations 114 along with their respective total scores is presented to the user via the user interface 110. A selection of a group recommendation from the plurality of group recommendations 114 is received from the user to deploy the group recommendation and the group of heterogeneous VMs in the selected group recommendation is deployed.

FIG. 2 is a flowchart illustrating an example method 200 for optimizing VMs deployment. In some examples, the method 200 is executed or otherwise performed by the server device 122 of FIG. 1.

At 202, optimization goals for deploying a group of heterogeneous VMs are received from user via the user interface 110. In some examples, the optimization goals comprise a capacity and a defined quantity of VMs in a group of heterogeneous VMs. At 204, a recommendation timer is set/initiated and at 206, candidate VMs are identified based on the optimization goals. At 208, the identified candidate VMs are listed into a candidate group of VMs and each of the VMs in the candidate group of VMs is assigned to a location from a plurality of locations. At 210, a determination is made whether the recommendation timer has expired. When the recommendation timer has not expired, at 212, a score for each of the identified candidate VMs is determined. At 214, a candidate VM with a highest score amongst the determined scores is assigned to a first group recommendation of a plurality of group recommendations. At 216, a location usage counter for the location of the candidate VM is updated. At 218, a determination is made whether the location usage counter for the location of the candidate VM has met a location usage threshold. Upon determining that the location usage counter for the location of the candidate VM has met the location usage threshold at 218, the candidate VM from the candidate group of VMs and any other VM from the candidate group of VMs that have been assigned to the location of the candidate VM are removed at 220. Upon determining that the location usage counter for the location of the candidate VM has not met the location usage threshold at 218, the score for the candidate VM and any other VM from the candidate group of VMs that have been assigned to the location of the candidate VM are updated based on the updated location usage counter for the location of the candidate VM at 222.

If the recommendation timer has expired at 210, a total score for each of the plurality of group recommendations is identified at 224. At 226, based on the total score for each of the plurality of group recommendations, a group recommendation is selected from the plurality of group recommendations to deploy the group recommendation comprising the group of heterogeneous VMs. At 228, the group of heterogeneous VMs in the selected group recommendation is deployed.

In some examples, operations 224-228 may be performed even before the recommendation timer has expired. In such examples, at 210, determination is made whether the recommendation timer has expired or all combinations of the optimization goals for the candidate VMs have been evaluated. Thus, even if the recommendation timer has not expired, operations 224-228 may be performed if all combinations of the optimization goals for the candidate VMs have been evaluated.

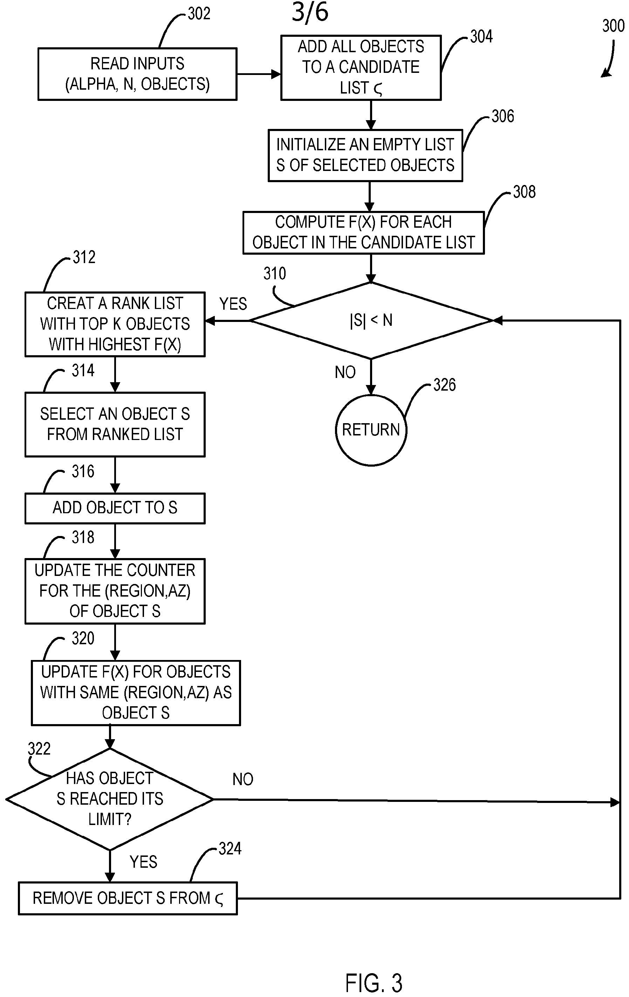

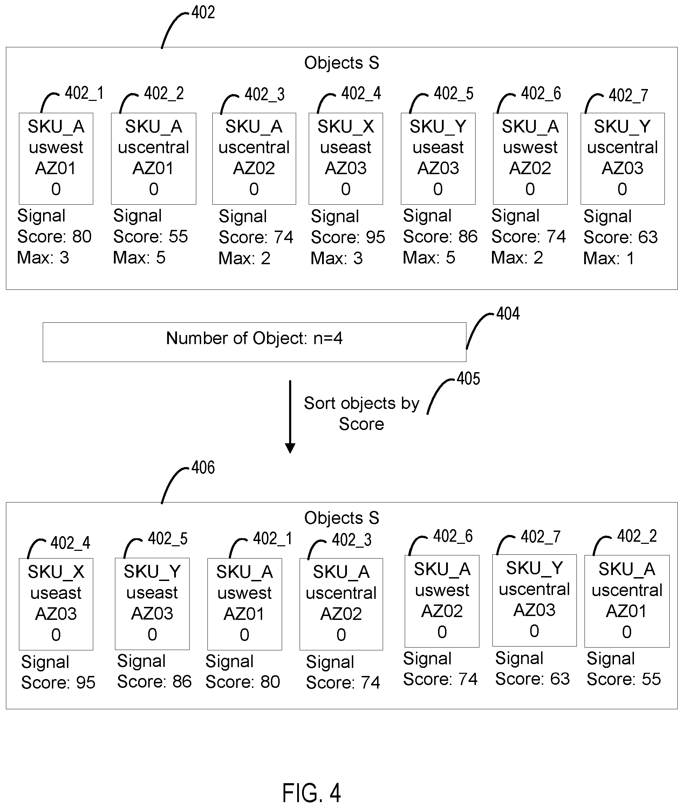

FIG. 3 is a flowchart illustrating an example method 300 of building greedy recommendations for recommending VMs in an optimized manner based on user input. In some examples, the method 300 is executed or otherwise performed by the server device 122 in a system such as system 100 of FIG. 1. At 302, inputs from a user are read. The inputs comprise a number of objects N (e.g. VMs) to be deployed, a maximum number of instances of an object allowed in a particular region and availability zone (called alpha), and weighted parameters (e.g., capacity, price, balance, etc.). The objects represent a combination of VM names, region, availability zone (AZ), and a type of VMs. For example, with reference now to FIG. 4, objects S 402 includes a list of objects 402_1-402_7. Each of the objects in the objects S 402 have a particular SKU, a region identification, an availability zone identification, a maximum object usage threshold, and a signal score. In one example, the server device 122 identifies the SKUs, the region identification, the availability zone identification, set the maximum usage, and calculates the signal score. The exemplary list of candidate VMs (e.g., the objects 402_1-402_7) may be a result of the user requesting VMs spread across 3 regions, 3 AZs in each region, 3 SKUs, and a particular type (e.g., spot, on-demand etc.). Further, while the objects shown in FIG. 4 are represented by boxes with identifying information therein, this is merely illustrative as the candidate VMs (e.g., the object shown in FIG. 4) would be transparent to the user and the information displayed for each object in FIG. 4 is used by the server device 122 to provide recommendations for the user.

With reference back to FIG. 3, at 304, combinations of all objects based on the user input are added to a candidate list. At 306, an empty list S of selected objects from the candidate list is initialized. The selected objects may be a predefined number of objects pruned based on their high signal score from all the objects in the candidate list. For example, a top 7 objects with high signal scores are selected as illustrated at 402 in Fig. 4.

Referring again to FIG. 3, at 308, a score (F(x)) for each object in the candidate list is computed. The score (F(x)) is computed as described in equation 1 above. At 310, a determination is made as to whether or not the defined quantity of objects has been selected yet. In the first iteration, there is an empty list that was initialized at 306 and no object has been yet added to this list. Upon determining that the defined quantity of objects has not been selected yet, at 312, a rank list with a sub-set (e.g., K out of the objects in the candidate list) of top objects with the highest computed score is created. In some examples, other than capacity and pricing, the system 100 computes the score and rank the distributions based on other optimization goals such as pre-provisioning service data, subscription data (that is user provided), and spot survivability model. In some examples, with respect to pre-provisioning service data, rather than provisioning all VMs on demand when requested by a user, the service device 122 preemptively provisions VMs that it knows are popular among customers by SKU, type, time of request, etc. Since the server device 122 has access to this data based on what the serve device 122 has already pre-provisioned, using this signal in a recommendation provides an ability to lead user/customers to using candidates that are already pre-provisioned and lead to a deployment that is faster and that have a higher change of success. In some examples, with respect to subscription data, users have quotas that serve as limits on the types of VMs they can use. As such, using this data, the service device 122 can recommend combinations to the user that would not violate the user's subscription quotas. In some example, with respect to spot survivability model, when users request Spot VMs, they may be signing up for less reliability in exchange for cheaper cost. However, the server 122 has access to a model that predicts the survivability rate of a Spot VM and/or a likelihood that it the spot VM will live over a certain time period. With this data, the service device 122 can lead users toward Spot VM types that are likely to live longer.

At 314, an object with highest computed score (F(x)) is selected from the ranked list. In some examples, when K is greater than one, the ranked list comprises a plurality of objects (e.g., the number of objects=K) with a highest score and one or more of them is selected randomly. At 316, the selected object is added to the list S. At 318, a counter for the location (e.g., region, AZ) of the selected object is updated (the counter may be initialized to zero and updating means incrementing the counter).

At 320, the scores (F(x)) for objects with same location (e.g., region,AZ) as the selected object are updated / recomputed. This is advantageous because the scores for only the objects in the same location (e.g., region,AZ) needs to be recomputed as the scores of other objects in different locations (e.g., different region,AZ) are not affected by the nature of the equation 1 (the balancing portion does not impact score of objects in other locations (e.g., other region,AZ)). Thus, the greedy solution requires lesser computing resources.

At 322, a determination is made whether the object S has reached its limit (which may be set by system 100 of the managed VM cloud provider) e.g., for the (region,AZ). Upon determining that the object S has reached its limit (e.g., this limit (alpha) is the max value that shown below each object in FIG. 4, at 402), at 324, the object S is removed from the candidate list thereby further reducing the computing resource requirements in next iterations. Upon determining that the object S has not reached its limit or after removing the object at 324, the method 300 goes back to perform the determination at 310. If it is determined, at 310, that the defined quantity of VMs has been selected (i.e., |S| becomes equal to N), the ranked list with objects having highest computed scores is returned as recommendation at 326.

FIGS. 4-5 illustrate exemplary calculations for providing recommendations to optimize VMs deployment based on user input. In some examples, the calculations may be performed by instructions 106 that are executed by the server device 122 in a system such as systems 100 of FIG. 1.

Referring to FIG. 4, at 402, objects S comprising objects 402_1, 402_2, 402_3, 402_4, 402_5, 402_6, and 402_7 may be identified by the system 100 based on user input to deploy n=4 objects (at 404). In this example, lower scoring objects (i.e., objects with signal score below 55) are pruned. Pruning of the objects is advantageous because if the goals are price and capacity, lower scoring SKUs will be more expensive and have worse available capacity. Further, the system 100 uses less computing resources by performing lesser number of calculations due to pruning the lower scoring objects.

For example, object 402_1 has SKU_A, in uswest region, with AZ01 and initialized to zero count of selections. The signal score for the object 402_1 is 80 and a maximum of 3 instances of the object 402_1 may be deployed. The identification of the objects 402 may be based on user input that the user wants to deploy VMs with SKU_A, SKU_X, or SKU_Y in three regions with three availability zones (e.g., AZ01, AZ02, AZ03). The user input may be provided to the system 100 via a user interface such as user interface 110. In some examples, the server device 122 determines the signal score and the maximum number of instance permissible for each object. The signal score for each object represents an initial score assigned to a VM based on capacity and price data. At 405, the objects are sorted by the signal score to give sorted list of objects at 406.

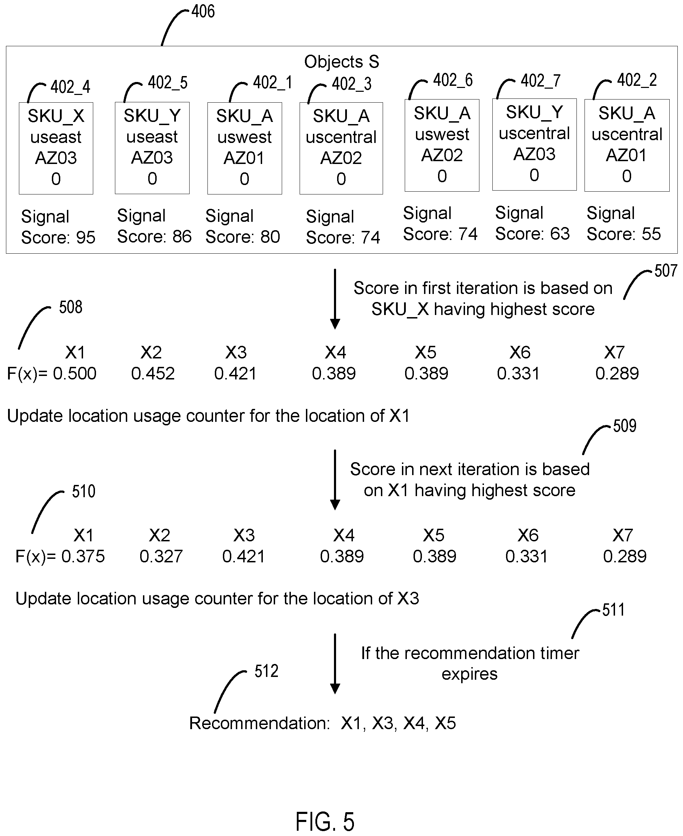

Referring to FIG. 5, the sorted objects 406 are represented. The system 100 computes the scoring function of equation 1 in the first iteration at 507. At 508, the scores computed using the scoring function are shown for the objects (X1 to X7). For ease of illustration, at 508, object 402_4 is shown as X1, object 402_5 is shown as X2, object 402_1 is shown as X3, object 402_3 is shown as X4, object 402_6 is shown as X5, object 402_7 is shown as X6, and object 402_2 is shown as X7. Table 1 below shows the calculation of the scores (F(x)), at 508, for the objects using equation 1.

Table 1:

| Object | |
|---|---|
| | $$F(x) = \frac{score(x)}{\max\limits_{y \in S} score(y)} \lambda - (1 - \lambda) \frac{Counter_{(region,AZ)}(x)}{n}$$ |
| X1 | $$F(x) = \frac{95}{95} 0.5 - (1 - 0.5)\frac{0}{4} \quad = 0.5$$ |
| X2 | $$F(x) = \frac{86}{95} 0.5 - (1 - 0.5)\frac{0}{4} \quad = 0.452$$ |
| X3 | $$F(x) = \frac{80}{95} 0.5 - (1 - 0.5)\frac{0}{4} \quad = 0.421$$ |
| X4 | $$F(x) = \frac{74}{95} 0.5 - (1 - 0.5)\frac{0}{4} \quad = 0.389$$ |
| X5 | $$F(x) = \frac{74}{95} 0.5 - (1 - 0.5)\frac{0}{4} \quad = 0.389$$ |
| X6 | $$F(x) = \frac{63}{95} 0.5 - (1 - 0.5)\frac{0}{4} \quad = 0.331$$ |
| X7 | $$F(x) = \frac{55}{95} 0.5 - (1 - 0.5)\frac{0}{4} \quad = 0.289$$ |

The location usage counter for the location of X1 is updated at 508 because the object X1 is selected based on X1 having the highest score. It may be noted that the balancing portion of the equation 1 does not impact score calculation in the first iteration because the $Counter_{(region,AZ)}(x)$ is zero for all objects. The scoring, at 509, in the next iteration is computed based on X1 having the previous highest score. Note: since X1 and X2 have the same location (e.g., same region and availability zone), X1 and X2 are the only two objects in which the score (F(x) changes since X1 and X2 are the only objects in which the $Counter_{(region,AZ)}(x)$ is updated. Table 2 below shows the calculation of scores, at 510, for the objects using equation 1.

Table 2:

| Object | $F(x) = \dfrac{score(x)}{\max\limits_{y \in S} score(y)} \lambda - (1 - \lambda)\dfrac{Counter_{(region,AZ)}(x)}{n}$ |
|---|---|
| X1 | $F(x) = \dfrac{95}{95} 0.5 - (1 - 0.5)\dfrac{1}{4} \quad = 0.375$ |
| X2 | $F(x) = \dfrac{86}{95} 0.5 - (1 - 0.5)\dfrac{1}{4} \quad = 0.327$ |
| X3 | $F(x) = \dfrac{80}{95} 0.5 - (1 - 0.5)\dfrac{0}{4} \quad = 0.421$ |
| X4 | $F(x) = \dfrac{74}{95} 0.5 - (1 - 0.5)\dfrac{0}{4} \quad = 0.389$ |
| X5 | $F(x) = \dfrac{74}{95} 0.5 - (1 - 0.5)\dfrac{0}{4} \quad = 0.389$ |
| X6 | $F(x) = \dfrac{63}{95} 0.5 - (1 - 0.5)\dfrac{0}{4} \quad = 0.331$ |
| X7 | $F(x) = \dfrac{55}{0.5} 0.5 - (1 - 0.5)\dfrac{0}{4} \quad = 0.289$ |

In the calculations of Table 1 and Table 2, the weight ($\lambda$) is taken as 0.5 to have a balance between cost and load balance across (region,AZ). If the user intends to be greedy towards cost, higher values of weight ($\lambda$) (e.g., between 0.5 to 1) may be used for calculations. If the user intends be greedy towards load balanced deployment of VMs spread across (region,AZ), lesser values of weight ($\lambda$) (e.g., between 0.5 to 0) may be used for calculations.

As seen from scores at 510, the score of X3 is more than the score of X2 and X1 (each of which had a higher initial signal score and a higher score after first iteration than X3 - see at 406 and 508 respectively in FIG. 5). Further, because X3 has the highest score (F(x)), X3 is selected to be in a recommendation group and the location usage counter for the location of X3 is updated at 510. If the recommendation timer expires at 511, the objects X1, X3, X4, X5 are recommended at 512 based on their scores. Otherwise, if the recommendation counter does not expire, the process (e.g., steps 507 and 509) are repeated and each object with the highest score (F(x)) is placed in a recommendation group until the recommendation group reaches a maximum number (e.g., 4 in the previous example), and then another recommendation group is formed.

In some examples, the recommendation timer may expire before or after the number of iterations performed in FIG. 5. In other words, more or fewer number of iterations may be performed than illustrated in FIG. 5 before the recommendation timer expires.

In some examples, when the recommendation timer has not expired, different values of weight ($\lambda$) (e.g., 0.25 and 0.75) may also be used to give a variety of recommendations. In such examples, the recommendations may be identified to be balanced, cost focused, or load balancing focused based on the weight ($\lambda$) used for calculating the scores for recommendations. The user interface 110, in such examples, will advantageously present the different recommendations along with the weight ($\lambda$) used for calculating the scores for respective recommendations. From these recommendations, the user may select a group recommendation that is balanced, cost focused, or load balancing focused according to user needs.

Additional Examples

In some examples, a user does not need to select from the presented recommendations. In such examples, the system 100 may learn, using artificial intelligence and machine learning techniques, that the user has a similar profile as some other users who selected the recommendations to be balanced, cost focused, or load balancing focused based on the weight ($\lambda$). For example, if these other users selected cost focused recommendation, then the user is presented with the cost focused recommendation as the preferred recommendation. Similarly, if these other users selected balanced or load balancing focused recommendation, then the user is presented with the balanced or load balancing focused recommendation as the preferred recommendation. In some examples, the system automatically selects the preferred recommendation without presenting the recommendations to the user because the server device 122 has a higher confidence score in deploying the preferred recommendation based on a count of other users with similar profile as the user.

In some examples, a VM cloud provided platform (such as the system 100) can use customer inputs to create fitting distributions (recommendations based on user inputs/optimization goals) and then a deployment service can deploy the best recommendation on the customer's behalf. The server device 122 uses the scoring function to generate combinations within a set time limit and relies on a greedy algorithm to ensure that the search starts at an optimal point in the result space.

In some examples, the user input comprises candidate SKUs, locations (regions, AZs list) for each SKU, number of regular instances needed, number of spot instances needed, and optimization goals comprising price, capacity, and zonal balance. If the user is only interested in zonal balance (and not concerned about the price and capacity), the weight is set to be 0 so that the scoring function is left with only the zonal balancing portion.

In some examples, the user input includes other fields like maximum price or customer quota etc. The user input may be provided on the user interface 110 that provides user with various options such as text boxes, drop down selections, checkbox, etc. Other ways of providing user input such as by spoken means are also within scope of this disclosure. The system 100 provides an application programming interface (API) that uses the user inputs to generate combinations of VMs and then return a ranked list of these combinations where higher scoring combinations were better at satisfying the optimization goals. If the goal in the optimization goal is Capacity, then the higher scoring combinations of VMs use VMs in regions and/or availability zones that had healthier capacity health signals (e.g., higher signal scores).

In some examples, let $S$ be the set of all possible combinations of VMs based on the customer's request. Of the entire result space $S$, only the subset of combinations $C$ is created. Each combination $c$ in $C$ is represented by a list of CandidateRecommendation objects, each of which contains the fields {SKU, InstanceType, ResponseLocation holding [Region, AvailabilityZone], NumberOfInstances}. Let $G$ be the set of optimization goals provided by the customer. For each goal $g$ in $G$, there is a function that takes a combination c and returns a score $s_g(c)$. Let $t(c)$ be the time to evaluate the combination $c$. Let $Z$ be the set of all availability zones and $I_z(c)$ be an indicator function that returns 1 if the combination $c$ is in availability zone $z$ and 0 otherwise. In this example, the objective is to Maximize $\Sigma_{c \in C} \Sigma_{g \in G} s_g(c)$ Subject to

$$\sum_{c \in C} t(c) \leq 1$$

$$\sum_{g \in G} s_g(c_{i+1}) \geq \sum_{g \in G} s_g(c_i)$$

$$\frac{1}{|Z|}\sum_{c \in C}\sum_{z \in Z} I_z(c) \geq \frac{1}{|Z|}\sum_{c \in S}\sum_{z \in Z} I_z(c)$$

In some examples, calculations in further iterations may be further reduced by pruning or removing some of the objects which are from same (region,AZ) because the scoring function penalizes these objects and such objects have a lower possibility of being included in recommendation.

In some examples, the calculations performed for a user are cached and the system 100 does not initialize the parameters (e.g., candidate list, location usage counter etc.) for further requests from the same user over a defined period of time. In such examples, load balancing of the recommendations is performed based on the earlier recommendations to the user. In these examples, updated calculation may be needed based on system capacity. For example, the number of VMs previously available in a particular location has changed since the last time the user requested VM recommendations.

Some other goals in the optimization goals include eviction, price, ProvisioningTime, rank, diversity, and balanced may also be provided. Eviction is implemented to use the survivability rate for Spot VMs. A higher survivability rate is better because it implies that the chance of the Spot VM surviving is greater. Thus, Spot VMs with lower survivability rate will be evicted. Price is implemented to prefer lower priced VMs because customers want cheaper prices. ProvisioningTime is implemented to use the number of pre-provisioned instances for a given SKU, region/AZ, and set of extra filters, such as PIRFilters and SIGFilters. In some examples, PIRFilters stands for public image repository filters and SIGFilters stands for shared image gallery filter, which includes filters like Image version, OS Disk Size, OS Disk storage account type, network interface card count, OS Type, Image Publisher, Image Offer, Image SKU, Subscription ID, Resource Group Name, Gallery Name, Image Name, and more.

A greater number of pre-provisioned VMs is better, because it will likely mean a smaller provisioning time. Rank is implemented so that each SKU will have a priority assigned in the request from the customer. Diversity is implemented to give more weight to VM distributions that use more VM sizes. Balanced is implemented to give more weight to VM distributions that are more zonally balanced.

In some examples, the result space can become extremely large as the number of candidates (n) and number of instances (r) to select grows. To determine the size of the result space, the possible combinations with repetition can be calculated using the formula: (n + r - 1)! / (r! * (n-1)!). Because the number of candidates can be huge even for an average request from the customer (grows with more SKUs, regions, availability zones, types used) and the number of instances requested can also be large, it will simply take too long to create all the combinations and score them. Aspects of the disclosure provide optimized recommendations upon expiry of the recommendation timer even if the number of combinations to evaluate is huge. Therefore, the Greedy algorithm is used to reduce the number of combinations to evaluate and prioritize high-scoring ones.

Greedy solution with tuning parameter for score vs. Balance approach:

- Sort Candidate Recommendation objects by signal scores.

- Create a dictionary that functions as an AZ max instances counter.

- Use the object function of equation 1 to evaluate each Candidate Recommendation object.

- To build the first combination, grab the object with the highest score from the objective function while respecting the AZ max instances counter. Re-evaluate the object function for that object. Now with the new score for that object, grab the highest scoring recommendation object as the next object in the combination. Repeat this process until the first combination is completed. Now it has the combination with the highest greedy score.

- It can use buckets to generate more combinations so that instead of always grabbing the object with the highest greedy score, it can place the objects in buckets mapping to greedy score ranges and randomly select objects from the buckets. This randomization is valuable because a high greedy score is not equivalent to a high final score of the combination in the end. Therefore, it needs some randomization to create multiple combinations that are likely to get higher signal scores.

Exemplary Operating Environment

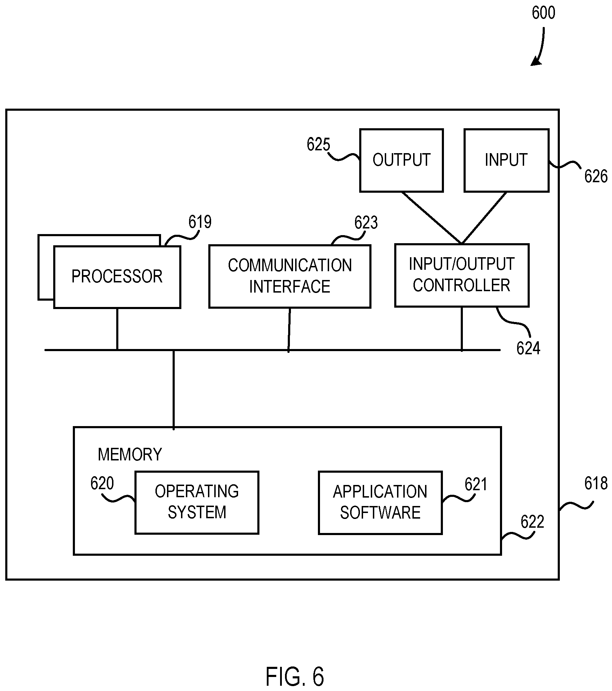

The present disclosure is operable with a computing apparatus according to an embodiment as a functional block diagram 600 in FIG. 6. In an example, components of a computing apparatus 618 are implemented as a part of an electronic device according to one or more embodiments described in this specification. The computing apparatus 618 comprises one or more processors 619 which may be microprocessors, controllers, or any other suitable type of processors for processing computer executable instructions to control the operation of the electronic device. Alternatively, or in addition, the processor 619 is any technology capable of executing logic or instructions, such as a hard-coded machine. In some examples, platform software comprising an operating system 620 or any other suitable platform software is provided on the apparatus 618 to enable application software 621 to be executed on the device. In some examples, optimization of VMs deployment as described herein is accomplished by software, hardware, and/or firmware.

In some examples, computer executable instructions are provided using any computer-readable media that is accessible by the computing apparatus 618. Computer-readable media include, for example, computer storage media such as a memory 622 and communications media. Computer storage media, such as a memory 622, include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media does not include communication media. Therefore, a computer storage medium is not a propagating signal. Propagated signals are not examples of computer storage media. Although the computer storage medium (the memory 622) is shown within the computing apparatus 618, it will be appreciated by a person skilled in the art, that, in some examples, the storage is distributed or located remotely and accessed via a network or other communication link (e.g., using a communication interface 623).

Further, in some examples, the computing apparatus 618 comprises an input/output controller 624 configured to output information to one or more output devices 625, for example a display or a speaker, which are separate from or integral to the electronic device. Additionally, or alternatively, the input/output controller 624 is configured to receive and process an input from one or more input devices 626, for example, a keyboard, a microphone, or a touchpad. In one example, the output device 625 also acts as the input device. An example of such a device is a touch sensitive display. The input/output controller 624 may also output data to devices other than the output device, e.g., a locally connected printing device. In some examples, a user provides input to the input device(s) 626 and/or receives output from the output device(s) 625.

The functionality described herein can be performed, at least in part, by one or more hardware logic components. According to an embodiment, the computing apparatus 618 is configured by the program code when executed by the processor 619 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

At least a portion of the functionality of the various elements in the figures may be performed by other elements in the figures, or an entity (e.g., processor, web service, server, application program, computing device, or the like) not shown in the figures.

Although described in connection with an exemplary computing system environment, examples of the disclosure are capable of implementation with numerous other general purpose or special purpose computing system environments, configurations, or devices.

Examples of well-known computing systems, environments, and/or configurations that are suitable for use with aspects of the disclosure include, but are not limited to, mobile or portable computing devices (e.g., smartphones), personal computers, server computers, hand-held (e.g., tablet) or laptop devices, multiprocessor systems, gaming consoles or controllers, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. In general, the disclosure is operable with any device with processing capability such that it can execute instructions such as those described herein. Such systems or devices accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure include different computer-executable instructions or components having more or less functionality than illustrated and described herein.

In examples involving a general-purpose computer, aspects of the disclosure transform the general-purpose computer into a special-purpose computing device when configured to execute the instructions described herein.

An example system comprises a user interface; a processor; and a memory storing instructions that upon execution by the processor perform operations comprising: receiving, from a user via the user interface, optimization goals for deploying a group of heterogeneous VMs, the optimization goals comprising a price or capacity and a defined quantity of VMs in the group of heterogeneous VMs; setting a recommendation timer; based on the optimization goals, identifying candidate VMs; listing the identified candidate VMs into a candidate group of VMs, each of the VMs in the candidate group of VMs being assigned to a location from a plurality of locations; when the recommendation timer has not expired: determining a score for each of the identified candidate VMs; assigning a candidate VM with a highest score amongst the determined scores to a first group recommendation of a plurality of group recommendations; updating a location usage counter for the location of the candidate VM; determining whether the location usage counter for the location of the candidate VM has met a location usage threshold; upon determining that the location usage counter for the location of the candidate VM has met the location usage threshold, removing the candidate VM from the candidate group of VMs and any other VM from the candidate group of VMs that have been assigned to the location of the candidate VM; and upon determining that the location usage counter for the location of the candidate VM has not met the location usage threshold, updating the score for the candidate VM and any other VM from the candidate group of VMs that have been assigned to the location of the candidate VM based on the updated location usage counter for the location of the candidate VM; identifying a total score for each of the plurality of group recommendations; presenting, to the user via the user interface, the plurality of group recommendations along with their respective total scores; receiving a selection of a group recommendation from the plurality of group recommendations to deploy the group recommendation; and deploying the group of heterogeneous VMs in the selected group recommendation.

An example computerized method comprises receiving optimization goals for deploying a group of heterogeneous VMs, the optimization goals comprising a capacity and a defined quantity of VMs in the group of heterogeneous VMs; setting a recommendation timer; based on the optimization goals, identifying candidate VMs; listing the identified candidate VMs into a candidate group of VMs, each of the VMs in the candidate group of VMs being assigned to a location from a plurality of locations; when the recommendation timer has not expired: determining a score for each of the identified candidate VMs; assigning a candidate VM with a highest score amongst the determined scores to a first group recommendation of a plurality of group recommendations; updating a location usage counter for the location of the candidate VM; determining whether the location usage counter for the location of the candidate VM has met a location usage threshold; upon determining that the location usage counter for the location of the candidate VM has met the location usage threshold, removing the candidate VM from the candidate group of VMs and any other VM from the candidate group of VMs that have been assigned to the location of the candidate VM; and upon determining that the location usage counter for the location of the candidate VM has not met the location usage threshold, updating the score for the candidate VM and any other VM from the candidate group of VMs that have been assigned to the location of the candidate VM based on the updated location usage counter for the location of the candidate VM; identifying a total score for each of the plurality of group recommendations; based on the total score for each of the plurality of group recommendations, selecting a group recommendation from the plurality of group recommendations to deploy the group recommendation comprising the group of heterogeneous VMs; and deploying the group of heterogeneous VMs in the selected group recommendation.

An example computer storage medium storing computer-executable instructions that, upon execution by a processor, cause the processor to perform operations comprising: receiving optimization goals for deploying a group of heterogeneous VMs, the optimization goals comprising a capacity and a defined quantity of VMs in the group of heterogeneous VMs; setting a recommendation timer; based on the optimization goals, identifying candidate VMs; listing the identified candidate VMs into a candidate group of VMs, each of the VMs in the candidate group of VMs being assigned to a location from a plurality of locations; when the recommendation timer has not expired: determining a score for each of the identified candidate VMs; assigning a candidate VM with a highest score amongst the determined scores to a first group recommendation of a plurality of group recommendations; updating a location usage counter for the location of the candidate VM; determining whether the location usage counter for the location of the candidate VM has met a location usage threshold; upon determining that the location usage counter for the location of the candidate VM has met the location usage threshold, removing the candidate VM from the candidate group of VMs and any other VM from the candidate group of VMs that have been assigned to the location of the candidate VM; and upon determining that the location usage counter for the location of the candidate VM has not met the location usage threshold, updating the score for the candidate VM and any other VM from the candidate group of VMs that have been assigned to the location of the candidate VM based on the updated location usage counter for the location of the candidate VM; identifying a total score for each of the plurality of group recommendations; based on the total score for each of the plurality of group recommendations, selecting a group recommendation from the plurality of group recommendations to deploy the group recommendation comprising the group of heterogeneous VMs; and deploying the group of heterogeneous VMs in the selected group recommendation.

Alternatively, or in addition to the other examples described herein, examples include any combination of the following:

- wherein each of the candidate VMs comprises a signal score, a configuration, and location information.

- wherein the configuration comprises Stock Keeping Unit (SKU) and location information comprises region and availability zone information.

- wherein the score is determined by evaluating a scoring function, wherein the scoring function is equal to a scoring portion minus a balancing portion, wherein the scoring portion is equal to the score of the identified candidate VM divided by the highest score multiplied by a weight, wherein the balancing portion is equal to (1 - the weight) multiplied by the location usage counter for the location of the candidate VM divided by the defined quantity of VMs in the group of heterogeneous VMs.

- wherein assigning the candidate VM causes the first group recommendation to reach the defined quantity of VMs.

- wherein the identified candidate VMs in a first location have a first location usage threshold that is different from a second location usage threshold for a second identified candidate VM assigned to a second location.

- wherein the total score is a sum of scores for all candidate VMs in each of the plurality of group recommendations.

- wherein the selected group recommendation has a highest total score amongst the plurality of group recommendations.

- wherein the location usage threshold is a number of times a VM in a same region and availability zone can be used.

- wherein the optimization goals further comprising zonal balance.

Any range or device value given herein may be extended or altered without losing the effect sought, as will be apparent to the skilled person.

Examples have been described with reference to data monitored and/or collected from the users (e.g., user identity data with respect to profiles). In some examples, notice is provided to the users of the collection of the data (e.g., via a dialog box or preference setting) and users are given the opportunity to give or deny consent for the monitoring and/or collection. The consent takes the form of opt-in consent or opt-out consent.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The embodiments illustrated and described herein as well as embodiments not specifically described herein but within the scope of aspects of the claims constitute an exemplary means for receiving optimization goals for deploying a group of heterogeneous VMs, the optimization goals comprising a capacity and a defined quantity of VMs in the group of heterogeneous VMs; exemplary means for setting a recommendation timer; based on the optimization goals, exemplary means for identifying candidate VMs; exemplary means for listing the identified candidate VMs into a candidate group of VMs, each of the VMs in the candidate group of VMs being assigned to a location from a plurality of locations; when the recommendation timer has not expired: exemplary means for determining a score for each of the identified candidate VMs; exemplary means for assigning a candidate VM with a highest score amongst the determined scores to a first group recommendation of a plurality of group recommendations; exemplary means for updating a location usage counter for the location of the candidate VM; exemplary means for determining whether the location usage counter for the location of the candidate VM has met a location usage threshold; upon determining that the location usage counter for the location of the candidate VM has met the location usage threshold, exemplary means for removing the candidate VM from the candidate group of VMs and any other VM from the candidate group of VMs that have been assigned to the location of the candidate VM; and upon determining that the location usage counter for the location of the candidate VM has not met the location usage threshold, exemplary means for updating the score for the candidate VM and any other VM from the candidate group of VMs that have been assigned to the location of the candidate VM based on the updated location usage counter for the location of the candidate VM; exemplary means for identifying a total score for each of the plurality of group recommendations; based on the total score for each of the plurality of group recommendations, exemplary means for selecting a group recommendation from the plurality of group recommendations to deploy the group recommendation comprising the group of heterogeneous VMs; and exemplary means for deploying the group of heterogeneous VMs in the selected group recommendation.

The term "comprising" is used in this specification to mean including the feature(s) or act(s) followed thereafter, without excluding the presence of one or more additional features or acts.

In some examples, the operations illustrated in the figures are implemented as software instructions encoded on a computer readable medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

**The following is a list of further preferred embodiments of the invention:**

Embodiment 1. A method comprising:

receiving an input comprising optimization goals for deploying a group of heterogeneous VMs, the optimization goals comprising at least one goal and a defined quantity of VMs in the group of heterogeneous VMs;

setting a recommendation timer;

based on the optimization goals, identifying candidate VMs;

listing the identified candidate VMs into a candidate group of VMs, each of the VMs in the candidate group of VMs being assigned to a location from a plurality of locations;

when the recommendation timer has not expired:

determining a score for each of the identified candidate VMs;

assigning a candidate VM with a highest score amongst the determined scores to a first group recommendation of a plurality of group recommendations;

updating a location usage counter for the location of the candidate VM;

determining whether the location usage counter for the location of the candidate VM has met a location usage threshold;

upon determining that the location usage counter for the location of the candidate VM has met the location usage threshold, removing the candidate VM from the candidate group of VMs and any other VM from the candidate group of VMs that have been assigned to the location of the candidate VM; and

upon determining that the location usage counter for the location of the candidate VM has not met the location usage threshold, updating the score for the candidate VM and any other VM from the candidate group of VMs that have been assigned to the location of the candidate VM based on the updated location usage counter for the location of the candidate VM;

identifying a total score for each of the plurality of group recommendations;

based on the total score for each of the plurality of group recommendations, selecting a group recommendation from the plurality of group recommendations to deploy the group recommendation comprising the group of heterogeneous VMs; and

deploying the group of heterogeneous VMs in the selected group recommendation.

Embodiment 2. The method of embodiment 1, wherein each of the identified candidate VMs comprises a signal score, a configuration, and location information.

Embodiment 3. The method of embodiment 2, wherein the configuration comprises Stock Keeping Unit (SKU) and location information comprises region and availability zone information.

Embodiment 4. The method of embodiment 1, wherein the score is determined by evaluating a scoring function, wherein the scoring function is equal to a scoring portion minus a balancing portion, wherein the scoring portion is equal to the score of the identified candidate VM divided by the highest score multiplied by a weight, wherein the balancing portion is equal to (1 - the weight) multiplied by the location usage counter for the location of the candidate VM divided by the defined quantity of VMs in the group of heterogeneous VMs.

Embodiment 5. The method of embodiment 1, wherein assigning the candidate VM causes the first group recommendation to reach the defined quantity of VMs.

Embodiment 6. The method of embodiment 1, wherein the identified candidate VMs in a first location have a first location usage threshold that is different from a second location usage threshold for a second identified candidate VM assigned to a second location.

Embodiment 7. The method of embodiment 1, wherein the total score is a sum of scores for all candidate VMs in each of the plurality of group recommendations.

Embodiment 8. The method of embodiment 1, wherein the selected group recommendation has a highest total score amongst the plurality of group recommendations.

Embodiment 9. The method of embodiment 1, wherein the location usage threshold is a number of times a VM in a same region and availability zone can be used.

Embodiment 10. The method of embodiment 1, wherein the optimization goals comprise one or more of the following: capacity and price.

Embodiment 11. A system comprising:

a user interface;

a processor; and

a memory storing instructions that upon execution by the processor perform operations comprising:

receiving, from a user via the user interface, input comprising optimization goals for deploying a group of heterogeneous VMs, the optimization goals comprising a capacity and a defined quantity of VMs in the group of heterogeneous VMs;

setting a recommendation timer;

based on the optimization goals, identifying candidate VMs;

listing the identified candidate VMs into a candidate group of VMs, each of the VMs in the candidate group of VMs being assigned to a location from a plurality of locations;

when the recommendation timer has not expired:

determining a score for each of the identified candidate VMs;

assigning a candidate VM with a highest score amongst the determined scores to a first group recommendation of a plurality of group recommendations;

updating a location usage counter for the location of the candidate VM;

determining whether the location usage counter for the location of the candidate VM has met a location usage threshold;

upon determining that the location usage counter for the location of the candidate VM has met the location usage threshold, removing the candidate VM from the candidate group of VMs and any other VM from the candidate group of VMs that have been assigned to the location of the candidate VM; and

upon determining that the location usage counter for the location of the candidate VM has not met the location usage threshold, updating the score for the candidate VM and any other VM from the candidate group of VMs that have been assigned to the location of the

candidate VM based on the updated location usage counter for the location of the candidate VM;

identifying a total score for each of the plurality of group recommendations;

presenting, to the user via the user interface, the plurality of group recommendations along with their respective total scores;

receiving a selection of a group recommendation from the plurality of group recommendations to deploy the group recommendation; and

deploying the group of heterogeneous VMs in the selected group recommendation.

Embodiment 12. The system of embodiment 11, wherein each of the identified candidate VMs comprises a signal score, a configuration, and location information.

Embodiment 13. The system of embodiment 12, wherein the configuration comprises Stock Keeping Unit (SKU) and location information comprises region and availability zone information.

Embodiment 14. The system of embodiment 11, wherein the score is determined by evaluating a scoring function, wherein the scoring function is equal to a scoring portion minus a balancing portion, wherein the scoring portion is equal to the score of the identified candidate VM divided by the highest score multiplied by a weight, wherein the balancing portion is equal to (1 - the weight) multiplied by the location usage counter for the location of the candidate VM divided by the defined quantity of VMs in the group of heterogeneous VMs.

Embodiment 15. The system of embodiment 11, wherein assigning the candidate VM causes the first group recommendation to reach the defined quantity of VMs.

Embodiment 16. The system of embodiment 11, wherein the identified candidate VMs in a first location have a first location usage threshold that is different from a second location usage threshold for a second identified candidate VM assigned to a second location.

Embodiment 17. The system of embodiment 11, wherein the total score is a sum of scores for all candidate VMs in each of the plurality of group recommendations.

Embodiment 18. The system of embodiment 11, wherein the selected group recommendation has a highest total score amongst the plurality of group recommendations.

Embodiment 19. A computer storage medium storing computer-executable instructions that, upon execution by a processor, cause the processor to perform operations comprising:

receiving input comprising optimization goals for deploying a group of heterogeneous VMs, the optimization goals comprising a capacity and a defined quantity of VMs in the group of heterogeneous VMs;

based on the optimization goals, identifying candidate VMs;

listing the identified candidate VMs into a candidate group of VMs, each of the VMs in the candidate group of VMs being assigned to a location from a plurality of locations;

determining a score for each of the identified candidate VMs;

assigning a candidate VM with a highest score amongst the determined scores to a first group recommendation of a plurality of group recommendations;

updating a location usage counter for the location of the candidate VM;

updating the score for the candidate VM and any other VM from the candidate group of VMs that have been assigned to the location of the candidate VM based on the updated location usage counter for the location of the candidate VM;

identifying a total score for each of the plurality of group recommendations;

based on the total score for each of the plurality of group recommendations, selecting a group recommendation from the plurality of group recommendations to deploy the group recommendation comprising the group of heterogeneous VMs; and

deploying the group of heterogeneous VMs in the selected group recommendation.

Embodiment 20. The computer storage medium of embodiment 19, wherein the score is determined by evaluating a scoring function, wherein the scoring function is equal to a scoring portion minus a balancing portion, wherein the scoring portion is equal to the score of the identified candidate VM divided by the highest score multiplied by a weight, wherein the balancing portion is equal to (1 - the weight) multiplied by the location usage counter for the location of the candidate VM divided by the defined quantity of VMs in the group of heterogeneous VMs.

**Claims**

1. A method (200) comprising:

receiving (202) an input comprising optimization goals for deploying a group of heterogeneous VMs, the optimization goals comprising at least one goal and a defined quantity of VMs in the group of heterogeneous VMs;
setting (204) a recommendation timer;
based on the optimization goals, identifying (206) candidate VMs;
listing (208) the identified candidate VMs into a candidate group of VMs, each of the VMs in the candidate group of VMs being assigned to a location from a plurality of locations;
when the recommendation timer has not expired:

determining (212) a score for each of the identified candidate VMs;
assigning (214) a candidate VM with a highest score amongst the determined scores to a first group recommendation of a plurality of group recommendations;
updating (216) a location usage counter for the location of the candidate VM;
determining (218) whether the location usage counter for the location of the candidate VM has met a location usage threshold;
upon determining that the location usage counter for the location of the candidate VM has met the location usage threshold, removing (220) the candidate VM from the candidate group of VMs and any other VM from the candidate group of VMs that have been assigned to the location of the candidate VM; and
upon determining that the location usage counter for the location of the candidate VM has not met the location usage threshold, updating (222) the score for the candidate VM and any other VM from the candidate group of VMs that have been assigned to the location of the candidate VM based on the updated location usage counter for the location of the candidate VM;
when the recommendation timer has expired:

identifying (224) a total score for each of the plurality of group recommendations;
based on the total score for each of the plurality of group recommendations, selecting (226) a group recommendation from the plurality of group recommendations to deploy the group recommendation comprising the group of heterogeneous VMs; and
deploying (228) the group of heterogeneous VMs in the selected group recommendation.

2. The method of claim 1, wherein each of the identified candidate VMs comprises a signal score, a configuration, and location information.

3. The method of claim 2, wherein the configuration comprises Stock Keeping Unit (SKU) and location information comprises region and availability zone information.

4. The method of any of claims 1-3, wherein the score is determined by evaluating a scoring function, wherein the scoring function is equal to a scoring portion minus a balancing portion, wherein the scoring portion is equal to the score of the identified candidate VM divided by the highest score multiplied by a weight, wherein the balancing portion is equal to (1 - the weight) multiplied by the location usage counter for the location of the candidate VM divided by the defined quantity of VMs in the group of heterogeneous VMs.

5. The method of any of claims 1-4, wherein assigning the candidate VM causes the first group recommendation to reach the defined quantity of VMs.

6. The method of any of claims 1-5, wherein the identified candidate VMs in a first location have a first location usage threshold that is different from a second location usage threshold for a second identified candidate VM assigned to a second location.

7. The method of any of claims 1-6, wherein the total score is a sum of scores for all candidate VMs in each of the plurality of group recommendations.

8. The method of any of claims 1-7, wherein the selected group recommendation has a highest total score amongst the plurality of group recommendations.

9. The method of any of claims 1-8, wherein the location usage threshold is a number of times a VM in a same region and availability zone can be used.

10. The method of any of claims 1-9, wherein the optimization goals comprise one or more of the following: capacity and price.

11. A system (100) comprising:

   a user interface (110);
   a processor (116, 619); and
   a memory (104, 622) storing instructions (106) that upon execution by the processor (116, 619) perform operations comprising:

      receiving (202), from a user via the user interface (110), input comprising optimization goals for deploying a group of heterogeneous VMs, the optimization goals comprising a capacity and a defined quantity of VMs in the group of heterogeneous VMs;
      setting (204) a recommendation timer;
      based on the optimization goals, identifying (206) candidate VMs;
      listing (208) the identified candidate VMs into a candidate group of VMs, each of the VMs in the candidate group of VMs being assigned to a location from a plurality of locations;
      when the recommendation timer has not expired:

         determining (212) a score for each of the identified candidate VMs;
         assigning (214) a candidate VM with a highest score amongst the determined scores to a first group recommendation of a plurality of group recommendations;
         updating (216) a location usage counter for the location of the candidate VM;
         determining (218) whether the location usage counter for the location of the candidate VM has met a location usage threshold;
         upon determining that the location usage counter for the location of the candidate VM has met the location usage threshold, removing (220) the candidate VM from the candidate group of VMs and any other VM from the candidate group of VMs that have been assigned to the location of the candidate VM; and
         upon determining that the location usage counter for the location of the candidate VM has not met the location usage threshold, updating (222) the score for the candidate VM and any other VM from the candidate group of VMs that have been assigned to the location of the candidate VM based on the updated location usage counter for the location of the candidate VM;
      when the recommendation timer has expired:

         identifying (224) a total score for each of the plurality of group recommendations;
         presenting, to the user via the user interface (110), the plurality of group recommendations along with their respective total scores;
receiving (226) a selection of a group recommendation from the plurality of group recommendations to deploy the group recommendation; and
deploying (228) the group of heterogeneous VMs in the selected group recommendation.

12. The system of claim 11, wherein each of the identified candidate VMs comprises a signal score, a configuration, and location information, and/or
wherein the configuration comprises Stock Keeping Unit (SKU) and location information comprises region and availability zone information.

13. The system of any of claims 11-12, wherein the score is determined by evaluating a scoring function, wherein the scoring function is equal to a scoring portion minus a balancing portion, wherein the scoring portion is equal to the score of the identified candidate VM divided by the highest score multiplied by a weight, wherein the balancing portion is equal to (1 - the weight) multiplied by the location usage counter for the location of the candidate VM divided by the defined quantity of VMs in the group of heterogeneous VMs, or

wherein assigning the candidate VM causes the first group recommendation to reach the defined quantity of VMs, or
wherein the identified candidate VMs in a first location have a first location usage threshold that is different from a second location usage threshold for a second identified candidate VM assigned to a second location, or
wherein the total score is a sum of scores for all candidate VMs in each of the plurality of group recommendations, or
wherein the selected group recommendation has a highest total score amongst the plurality of group recommendations.

14. A computer storage medium (104, 622) storing computer-executable instructions (106) that, upon execution by a processor (116, 619), cause the processor (116, 619) to perform operations comprising:

receiving (202) input comprising optimization goals for deploying a group of heterogeneous VMs, the optimization goals comprising a capacity and a defined quantity of VMs in the group of heterogeneous VMs;
based on the optimization goals, identifying (206) candidate VMs;
listing (208) the identified candidate VMs into a candidate group of VMs, each of the VMs in the candidate group of VMs being assigned to a location from a plurality of locations;
determining (212) a score for each of the identified candidate VMs;
assigning (214) a candidate VM with a highest score amongst the determined scores to a first group recommendation of a plurality of group recommendations;
updating (216) a location usage counter for the location of the candidate VM;
updating (222) the score for the candidate VM and any other VM from the candidate group of VMs that have been assigned to the location of the candidate VM based on the updated location usage counter for the location of the candidate VM;
identifying (224) a total score for each of the plurality of group recommendations;
based on the total score for each of the plurality of group recommendations, selecting (226) a group recommendation from the plurality of group recommendations to deploy the group recommendation comprising the group of heterogeneous VMs; and
deploying (228) the group of heterogeneous VMs in the selected group recommendation.

15. The computer storage medium of claim 14, wherein the score is determined by evaluating a scoring function, wherein the scoring function is equal to a scoring portion minus a balancing portion, wherein the scoring portion is equal to the score of the identified candidate VM divided by the highest score multiplied by a weight, wherein the balancing portion is equal to (1 - the weight) multiplied by the location usage counter for the location of the candidate VM divided by the defined quantity of VMs in the group of heterogeneous VMs.

100

**SERVER DEVICE 122**

**MEMORY 104**

INSTRUCTIONS 106

RECOMMENDATION TIMER 108

PROCESSOR 116

**COMPUTING DEVICE 102**

USER INTERFACE 110

OPTIMIZATION GOALS 112

GROUP RECOMMENDATIONS 114

NETWORK 120

VIRTUAL MACHINES DATABASE 118

FIG. 1

FIG. 2

FIG. 3

402

Objects S

| 402_1 | 402_2 | 402_3 | 402_4 | 402_5 | 402_6 | 402_7 |
|---|---|---|---|---|---|---|
| SKU_A uswest AZ01 0 | SKU_A uscentral AZ01 0 | SKU_A uscentral AZ02 0 | SKU_X useast AZ03 0 | SKU_Y useast AZ03 0 | SKU_A uswest AZ02 0 | SKU_Y uscentral AZ03 0 |
| Signal Score: 80 Max: 3 | Signal Score: 55 Max: 5 | Signal Score: 74 Max: 2 | Signal Score: 95 Max: 3 | Signal Score: 86 Max: 5 | Signal Score: 74 Max: 2 | Signal Score: 63 Max: 1 |

Number of Object: n=4    404

Sort objects by Score    405

406

Objects S

| 402_4 | 402_5 | 402_1 | 402_3 | 402_6 | 402_7 | 402_2 |
|---|---|---|---|---|---|---|
| SKU_X useast AZ03 0 | SKU_Y useast AZ03 0 | SKU_A uswest AZ01 0 | SKU_A uscentral AZ02 0 | SKU_A uswest AZ02 0 | SKU_Y uscentral AZ03 0 | SKU_A uscentral AZ01 0 |
| Signal Score: 95 | Signal Score: 86 | Signal Score: 80 | Signal Score: 74 | Signal Score: 74 | Signal Score: 63 | Signal Score: 55 |

FIG. 4

406

Objects S

| 402_4 | 402_5 | 402_1 | 402_3 | 402_6 | 402_7 | 402_2 |
|---|---|---|---|---|---|---|
| SKU_X useast AZ03 0 | SKU_Y useast AZ03 0 | SKU_A uswest AZ01 0 | SKU_A uscentral AZ02 0 | SKU_A uswest AZ02 0 | SKU_Y uscentral AZ03 0 | SKU_A uscentral AZ01 0 |
| Signal Score: 95 | Signal Score: 86 | Signal Score: 80 | Signal Score: 74 | Signal Score: 74 | Signal Score: 63 | Signal Score: 55 |

507

Score in first iteration is based on SKU_X having highest score

508

|  | X1 | X2 | X3 | X4 | X5 | X6 | X7 |
|---|---|---|---|---|---|---|---|
| F(x)= | 0.500 | 0.452 | 0.421 | 0.389 | 0.389 | 0.331 | 0.289 |

Update location usage counter for the location of X1

509

Score in next iteration is based on X1 having highest score

510

|  | X1 | X2 | X3 | X4 | X5 | X6 | X7 |
|---|---|---|---|---|---|---|---|
| F(x)= | 0.375 | 0.327 | 0.421 | 0.389 | 0.389 | 0.331 | 0.289 |

Update location usage counter for the location of X3

511

If the recommendation timer expires

512

Recommendation: X1, X3, X4, X5

FIG. 5

600

625 OUTPUT    INPUT    626

619    623

PROCESSOR    COMMUNICATION
INTERFACE    INPUT/OUTPUT
CONTROLLER

624

MEMORY

620    OPERATING
SYSTEM    APPLICATION
SOFTWARE    621    618

622

FIG. 6

Europäisches Patentamt
European Patent Office
Office européen des brevets

# EUROPEAN SEARCH REPORT

**Application Number**

EP 25 16 5631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/078256 A1 (HUAWEI TECH CO LTD [CN]) 29 April 2021 (2021-04-29) * paragraphs [0007], [0008], [0012], [0013], [0040], [0085], [0086], [0126]; claim 4 * | 1-15 | INV. G06F9/50 G06F9/455 |
| A | US 2020/012513 A1 (JUNG GUEYOUNG [US] ET AL) 9 January 2020 (2020-01-09) * paragraphs [0006], [0008], [0021], [0033], [0053], [0073] * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 23 July 2025 | Buzgan, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 5631

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2025

| Patent document cited in search report | Publication date | Patent family member(s) | Publication date |
|---|---|---|---|
| WO 2021078256 A1 | 29-04-2021 | CN 112711461 A<br>WO 2021078256 A1 | 27-04-2021<br>29-04-2021 |
| US 2020012513 A1 | 09-01-2020 | US 2019188022 A1<br>US 2020012513 A1 | 20-06-2019<br>09-01-2020 |

EPO FORM P0459

For more details about this annex : see Official Journal of the European Patent Office, No. 12/82